## Europäisches Patentamt
## European Patent Office
## Office européen des brevets

(19)

(11) Veröffentlichungsnummer: **0 281 024 B1**

# EUROPÄISCHE PATENTSCHRIFT

(12)

(45) Veröffentlichungstag der Patentschrift: **03.06.92**

(21) Anmeldenummer: **88102875.7**

(22) Anmeldetag: **26.02.88**

(51) Int. Cl.5: **B23K 26/00**, B23K 33/00, B21D 51/32, B65D 8/22

(54) **Aus Metallblech gefertigter Behälter.**

(30) Priorität: **04.03.87 DE 3706916**
**24.01.88 DE 3802000**

(43) Veröffentlichungstag der Anmeldung:
**07.09.88 Patentblatt 88/36**

(45) Bekanntmachung des Hinweises auf die
Patenterteilung:
**03.06.92 Patentblatt 92/23**

(84) Benannte Vertragsstaaten:
**AT BE CH DE FR GB IT LI NL SE**

(56) Entgegenhaltungen:
**EP-A- 0 199 279**

**PATENT ABSTRACTS OF JAPAN, Band 9, Nr.
38, 19. Februar 1985, Seite 35 M 358; & JP-
A-59 179 284 (FUTABA SANGYO K.K.)
11-10-1984**

(73) Patentinhaber: **Büdenbender, Bernd
Schubertweg 5
W-2160 Stade(DE)**

(72) Erfinder: **Büdenbender, Bernd
Schubertweg 5
W-2160 Stade(DE)**

(74) Vertreter: **Grosse, Dietrich, Dipl.-Ing. et al
Patentanwälte HEMMERICH-
MÜLLER-GROSSE-POLLMEIER-MEY Hammerstrasse 2
W-5900 Siegen 1(DE)**

# Beschreibung

Die Erfindung betrifft einen, nach dem Oberbegriff des Anspruchs 1, aus Metallblech gefertigten Behälter. Desweiteren betrifft die Erfindung eine Vorrichtung zum Herstellen solcher Behälter.

Es ist grundsätzlich bekannt, Böden und/oder Oberböden von Behältern mit deren Mantel durch Falzung oder durch Schweißung zu verbinden. Im Falle des Falzens kann es erforderlich werden, die Falze durch Auftragen eines Dichtungsmittels auf zu verfalzende Bereiche abzudichten. Es ist auch bekannt, bei der Herstellung von Behältern aus Weißblech Falze durch Lötungen abzudichten.

Aus der DE-A1-35 46 458 ist es weiterhin bekannt, bei der Herstellung von Behältern vor oder nach der Fertigstellung eines Falzes zumindest zwei von dessen Schichten durch Schmelzschweißen wenigstens stellenweise miteinander zu verbinden, um die Festigkeit und, bei ununterbrochener Schweißung, die Dichte des Falzes zu verbessern.

Es hat sich jedoch gezeigt, daß insbesondere durch Laserstrahlen an Falzen bewirkte Schmelzschweißnähte oft weder die gewünschte Verstärkung der mechanischen Verbindung noch die erstrebte absolute Dichte des Behälters sichern: In der DE-A1-35 46 458 wird zwar angegeben, daß zumindest zwei, besser drei Schichten der Bleche miteinander verschweißt werden sollen; in manchen Bereichen eines Falzes jedoch liegen die diesen bildenden Blechschichten nicht direkt aufeinander, sondern verlaufen durch einen Luftspalt voneinander getrennt, so daß mittels eines Laserstrahles zwar die Schichten angeschmolzen werden können, nicht aber miteinander verbunden werden. Hierbei kann noch nicht einmal davon ausgegangen werden, daß solche spaltartigen Hohlräume innerhalb eines Falzes nur an sehr bestimmten Stellen vorliegen, da auch bei sorgfältiger Fertigung und einwandfreien Vorrichtungen zum Falzen gelegentlich Mißbildungen von Falzen auftreten, bei denen vom üblicherweise gebildeten Falz abweichende Verhältnisse vorliegen und zusätzlich ein Schmelzschweißen unterbindende Hohlräume auftreten können.

In JP-A-59-179 284 ist das Falzen und das nachträglich Laserschweißen eines Kraftstofftanks beschrieben.

Die Erfindung geht von der Aufgabe aus, bei zur mechanischen Verstärkung und/oder zum Abdichten von Falzen vorgesehenen, durch Schmelzschweißen bewirkten Schweißnähten diese so anzuordnen, daß auch bei vom Üblichen abweichenden Ausbildungen von Falzen die Herstellung einer verstärkenden und dichtenden Schweißverbindung gesichert ist.

Diese Aufgabe wird durch die, in Anspruch 1 angegebenen Merkmale, gelöst. Hierbei wird davon Gebrauch gemacht, daß beim Umlegen eines solchen Falzes das äußere Blech zumindest im Endbereiche der äußeren Biegung fest auf das darunterliegende Blech gepreßt wurde und auch nach Fertigstellung des Falzes noch mit Vorspannung und damit definitiv und unter Ausschließung jeder Spalte bzw. Hohlräume auf diesem aufliegt, so daß ein auf diesen Bereich gerichteter Laserstrahl sicher zwei direkt aufeinanderliegende Schichten erreicht und damit diese auch sicher zu verbinden vermag. Damit wird aber nicht nur eine Verstärkung des Falzes und ein verläßliches Abdichten desselben erreicht, auch fehlgebildete Falze vermögen hierbei den gestellten Dichtigkeits- und Festigkeitsanforderungen zu genügen, so daß der bei der Fertigung entstehende Ausschuß erfreulich abgesenkt wird.

Zweckmäßige und vorteilhafte Weiterbildungen der Erfindung sind den Unteransprüchen zu entnehmen.

Im einzelnen sind die Merkmale der Erfindung anhand der folgenden Beschreibung zweier Ausführungsbeispiele in Verbindung mit diese darstellenden Zeichnungen erläutert. Es zeigen hierbei:

Figur 1 schematisch und geschnitten einen einen abgebrochen dargestellten Boden und abgebrochen dargestellten Mantel verbindenden, in definierter Stellung gehaltenen Falz mit einer üblichen und einer erfindungsgemäßen Schweißnaht, und

Figur 2 einen falsch gebildeten Falz mit gleichartigen Einwirkungen eines Laserstrahles auf zwei mögliche vorgesehene Verbindungsbereiche, und

Figur 3 einen einen konischen Mantelbereich aufweisenden Falz mit einem auf diesen gerichteten Laserstrahl.

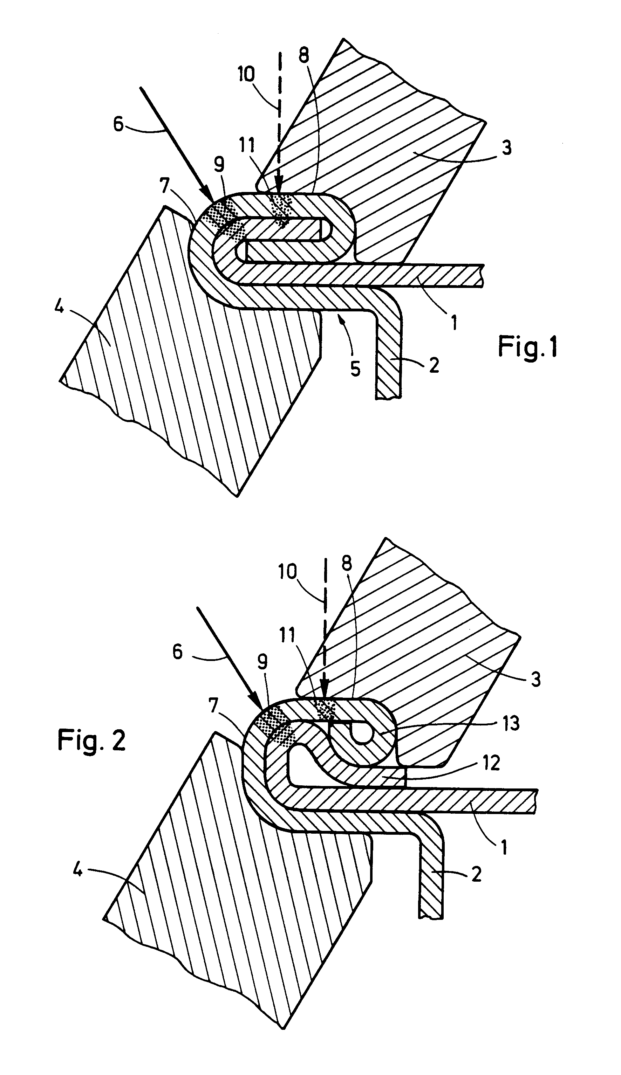

In der Fig. 1 sind abgebrochen ein Mantel 1 und ein Boden 2 eines aus Metallblech gefertigten Behälters gezeigt, deren Randbereiche durch einen mittels der Druckrollen 3 und 4 gehaltenen bzw. geführten Falz 5 miteinander verbunden sind. Eine weitere Verbindung soll durch eine Schmelzschweißnaht gegeben werden, die mittels eines Laserstrahles 6 bewirkt wird. Dieser Laserstrahl 6 ist auf die äußere, exponierte und dem Mantel gegenüberliegende Wulstfläche 7 des Falzes 5 so gerichtet, daß er auf diesen Wulst in dessen Endbereich gegen die anschließende ebene Deckfläche 8 hin auftrifft. Damit wird die durch ein Punktraster angedeutete, durch Schmelzschweißung bewirkte Schweißnaht 9 im Endbereiche des im Querschnitt durch einen Kreisbogen angedeuteten Wulstbereiches gebildet. Es kann hierbei davon ausgegangen werden, daß bei dieser Lage stets das äußere der Bleche unter Vorspannung auf dem darunterliegenden aufliegt und damit bei entsprechender Einstellung des Laserstrahles und damit auch entsprechender Erhitzung der direkt übereinanderliegenden Schichten eine durchgehende Schmelzschweißung erfolgt. Beim Schweißen erweisen sich die Druckrollen 3 und 4 als vorteilhaft, die den Falz 5 zwischen sich einschließen und damit den Falz zumindest im umgriffenen Bereiche eindeutig positionieren. Zweckmäßig ist eine der Rollen, bspw. die Druckrolle 3, auf einer ortsfest gelagerten Welle vorgesehen, die derart angetrieben wird, daß die Umfangsgeschwindigkeit der Rolle der gewünschten Schweißgeschwindigkeit entspricht. Die gegenüberliegende Druckrolle ist auf einer verschieb- oder schwenkbaren Achse gelagert und durch nicht dargestellte Feder-, pneumatische und/oder hydraulische Elemente gegen die Druckrolle 3 vorgespannt, so daß der Falz 5 mit Vorspannung umgriffen ist. Im Bedarfsfalle ist auch die Welle der zweiten Druckrolle kraftantreibbar.

Die im Falz 5 zwischen sich einspannenden Druckrollen 3 und 4 erlauben damit zunächst eine eindeutige Positionierung des Falzes 5 zumindest im von den Druckrollen 3 und 4 umfaßten Bereiche. Die Druckrollen lassen hierbei gleichzeitig den äußeren Winkelbereich der Wulstfläche 7 frei, so daß der Laserstrahl 6 ohne Behinderung zur Einwirkung gebracht werden kann. Als vorteilhaft erweist es sich, daß durch die exakte Positionierung einmal auch eine saubere Fukusierung des Laserstrahles möglich ist und in dessen optimalen Bereich gearbeitet wird, während andererseits auch die Lage der gewünschten Schweißnaht im Außenbogen der Wulstfläche 7 ausreichend definiert ist. Mittels des mindestens einer der Druckrollen 3 und 4 zugeordneten, zweckmäßig einstellbaren bzw. regelbaren Drehantriebes läßt sich weiterhin die gewünschte Vorschubgeschwindigkeit und damit die optimale Schweißgeschwindigkeit einstellen. Als vorteilhaft hat sich weiterhin aber auch noch gezeigt, daß die Vorspannung der Druckrollen nicht nur einen schlupfarmen Vorschub des Falzes 5 erlauben, sondern weiterhin noch die den Falz bildenden Blechbereiche derart vorspannt, daß gerade im für die Schweißnaht empfohlenen Winkelbereiche der Wulstfläche 7 zusätzliche Druckkräfte auf den Falz bewirkt werden, welche die Pressung der miteinander zu verschweißenden Blechschichten weiterhin intensiviert und damit den Erfolg der Schweißung sichert.

Zum Vergleiche wird eine übliche Schweißnaht aufgezeigt. Hier ist ein Laserstrahl 10 auf die im wesentlichen ebene Deckfläche 8 gerichtet. Zunächst einmal ist bei dieser Schweißung zu berücksichtigen, daß sie im Arbeitsbereich der Druckrollen 3 bis 4 erfolgt und daher bei der Unterbringung und Anordnung der Schweißvorrichtung gewisse Komplikationen auftreten können: Die Schweißvorrichtung ist gegen die positioniernden Druckrollen versetzt anzuordnen, so daß sie schon aus dem exakt positionierten Abschnitt herausgerückt ist und die Wirkung der Fukusierung beeinträchtigende Versetzungen auftreten können. Wesentlich ist noch, daß hierbei ohne gesteigerte Vorspannung gearbeitet werden muß und die Deckfläche 8 auf der darunterliegenden Blechschicht ohnehin mit nur mangelnder Vorspannung aufliegt, und damit die Möglichkeit besteht, daß diese Deckfläche 8, wenn auch nur mit geringer Distanz, frei über der darunterliegenden Schicht steht. In diesem Falle wird im wesentlichen die die Deckfläche 8 aufweisende Schicht erwärmt, eine ebensolche Erwärmung der darunterliegenden Schicht und das Ineinanderfließen der aufgeschmolzenen Metallmengen zur Bildung einer Schweißnaht sind aber nicht gesichert; es besteht vielmehr die Möglichkeit, daß aufgeschmolzenes Metall der oberen Schicht nach unten fließt, ohne sich mit der darunterliegenden Schicht zu verbinden.

Insbesondere bei Mißbildungen des Falzes ergeben sich gleichartige Schwierigkeiten. In Fig. 2 ist ein solcher Falz dargestellt, bei dem der Mantelsaum 12 direkt gegen den Mantel 1 gepreßt ist, ohne den äußeren Randbereich des Bodens 2 zu erfassen. Dessen Endbereich 13 ist vielmehr zu einem Rundwulst zusammengerollt. Auch hier ergibt sich im durch die Lehre der Erfindung bezeichneten Bereiche des Endes der äußeren Wulstfläche 7 ein fester, unter Vorspannung stehender Kontakt mit dem darunterliegenden Bereiche des umgebördelten Bereiches des Mantels 1, der durch den Andruck der Druckrollen 3 und 4 weiter intensiviert wird, so daß unter Einwirkung des auf diesen Bereich gerichteten Laserstrahles 6 eine einwandfreie mechanisch verstärkende und gleichzeitig abdichtende Schweißnaht 9 entsteht. Würde dagegen ein auf die ebene Deckfläche 8 gerichteter Laserstrahl 10 verwendet werden, so würde dieser zwar im Bereiche 11 das Material des Bodens 2 aufschmelzen; unter diesem Bereiche jedoch liegt ein Freiraum, der zwischen dem am Mantelende gebildeten Wulst und dem des Endbereiches 13 des Bodens 2 liegt. In diesem Falle würde zwar die Deckfläche unter Einwirkung des Laserstrahles 10 aufgeschmolzen werden; es besteht aber keine Möglichkeit einer Verbindung mit einer darunterliegenden Metallschicht, so daß in der Schweißnaht 11 nur ein Aufschmelzen und Erstarren erfolgt, soweit nicht das aufgeschmolzene Material sogar nach unten in den gebildeten Hohlraum abzufließen vermag und damit in die äußere Deckfläche schlitzförmige Löcher eingebrannt werden.

Zur sicheren Herstellung der erwünschten starken und dichten Verbindung ist daher der Laserstrahl 6 auf den Endbereich des im Querschnitt durch die Wulstfläche 7 gebildeten Kreisbogens zu richten. Der Laserstrahl 6 selbst ist hierbei auf die in der Mitte des Kreisbogens stehende Normale gerichtet und schließt mit dieser einen Winkel ein, der zwischen 10 und 90°, besser 15 und 80°, vorzugsweise aber zwischen 40 und 70° liegt. Eine eindeutige Positionierung des Falzes 5 im jeweils zu verschweißenden Bereich wird durch Druckrollen 3, 4 bewirkt, die gleichzeitig die optimale Schweißgeschwindigkeit sichern und einen zusätzlichen Andruck bewirken.

Es wurde jedoch gefunden, daß, insbesondere bei stark durchgewölbten Wulstflächen 7, bspw. die Fokussierung eines zum Schweißen benutzten Laserstrahles 6 Schwierigkeiten bedingen kann, da schon bei geringem seitlichen Auslaufen des Laserstrahles 6 sich die Entfernung zwischen seiner Quelle und seinem Auftreffpunkt auf die Wulstfläche ändert.

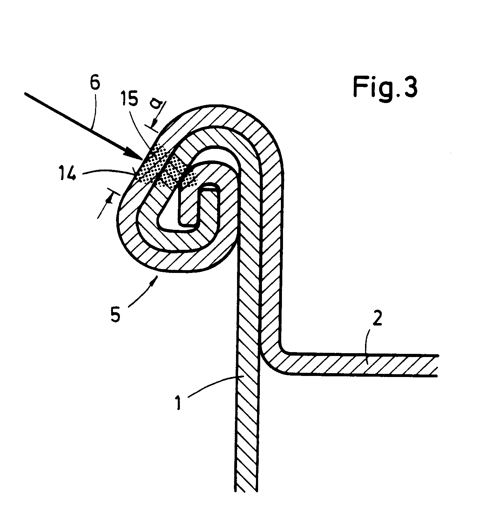

Solche Entfernungsabweichungen lassen sich unterbinden, indem der Auftreffbereich des Laserstrahles eben gestaltet oder gar geringfügig konkav ausgeführt wird. Ein Beispiel für einen gegen geringes seitliches Auswandern gesicherten Falz ist in der Fig. 3 dargestellt. Der hier vorgesehene Falz 5 ist derart ausgebildet, daß er einen konischen Mantelabschnitt 14 aufweist, der normal zur Richtung des Laserstrahles 6 derart steht, daß der Laserstrahl zur Bildung der Schmelzschweißnaht 15 auf ihn etwa mittig senkrecht auftrifft. Eine geringe seitliche relative Versetzung zwischen dem Laserstrahl 6 und dem konischen Mantelabschnitt 14 des Falzes 5 ändert bei dieser Ausgestaltung die Entfernung zwischen der Quelle des Laserstrahles und seinem Auftreffbereich nicht und kann damit auch keinen negativen Einfluß auf die Fokussierung des Laserstrahles ausüben. Um einerseits nicht nur sehr geringe Versetzungen wirkungslos zu machen, andererseits aber auch nicht den sicheren, festen mechanischen Kontakt mindestens der beiden äußeren Blechlagen zu gefährden, wurde als vorteilhaft gefunden, die Länge a der Mantellinien, das heißt die Breite des konischen Mantelabschnittes, nicht unter dem 1,4- und nicht über dem 5-fachen der Blechstärken zu wählen.

In jedem dieser Fälle wird erreicht, daß der Laserstrahl auf Bereiche gerichtet ist, die unter Vorspannung und fest und damit ohne jeden Zwischenraum auf der darunterliegenden Blechschicht aufliegen, so daß die Bildung einer durchgehenden, einwandfreien Schmelzschweißnaht 9 gesichert ist.

## Patentansprüche

1. Aus Metall gefertigter Behälter mit einem Mantel (1) und mit dessen Enden durch mehrlagige Falze (5) verbundenem Boden (2) und/oder Oberboden, wobei die Falze (5) durch Schweißen zusätzlich verstärkt, gesichert und/oder abgedichtet sind, und

die Schweißnaht (9) entlang der äußeren, exponierten Wulstfläche (7) des Falzes (5) angeordnet ist,
**dadurch gekennzeichnet,** daß der Falz (5) zuerst mit Druckrollen (3, 4) fertig zusammengepreßt und dann nachträglich geschweißt ist, und daß die Schweißnaht (9) im Winkelbereiche von 10° bis 90° gegen die auf der Mitte des Halbkreises stehenden Normale nach außen geneigt verläuft.

2. Behälter nach Anspruch 1,
**dadurch gekennzeichnet,**
daß die Schweißnaht (9) im Winkelbereiche von 15° bis 80° verläuft.

3. Behälter nach Anspruch 1
**dadurch gekennzeichnet,**
daß die äußere, exponierte Wulstfläche des Falzes (5) einen konischen, die Schmelzschweißnaht (15) aufnehmenden Mantelabschnitt (14) aufweist.

4. Behälter nach Anspruch 3,
**dadurch gekennzeichnet,**
daß mindestens die unter dem konischen Mantelabschnitt (14) liegende Teilfläche des Falzes (5) einen an dem konischen Mantelabschnitt (14) anliegenden konischen Mantelabschnitt aufweist.

5. Behälter nach Anspruch 3 oder 4,
**dadurch gekennzeichnet,**
daß die Länge (a) der Mantellinie des konischen Mantelabschnittes (14) das 1,4 -bis 5fache der Stärke des Bleches des Bodens (2) und/oder des Mantels (1) beträgt.

6. Behälter nach einem der Ansprüche 3 bis 5,
**dadurch gekennzeichnet,**
daß die Schweißnaht (9) im wesentlichen mittig auf den konischen Mantelabschnitt (14) aufgebracht ist.

7. Behälter nach einem der Ansprüche 3 bis 6,
**dadurch gekennzeichnet,**
daß die Mantellinien des Mantelabschnittes (14) geringfügig konkav durchgewölbt sind.

8. Vorrichtung zum Erstellen von Schweißnähten an Mantel (1) und Boden (2) bzw. Oberboden von Behältern verbindenden Falzen (5) nach einem der Ansprüche 1 bis 7, wobei zwei zur Aufnahme eines Falzes (5) profilierte Druckrollen (3, 4), von denen eine ortsfest gelagert und durch eine Antriebsvorrichtung drehantreibbar ist, und deren andere mittels ihrer Welle gegen die erste vorgespannt ist, und ihnen eine Laser-Quelle zugeordnet ist, dadurch gekennzeichnet, daß die Laser-Quelle so angeordnet ist, daß der von ihr bewirkte Laserstrahl (6) innerhalb der die Wellen der Druckrollen aufweisenden Ebene zwischen sie gerichtet ist.

## Claims

1. A container manufactured from metal and having a shell (1) with ends to which a bottom (2) and/or top are/is connected by multilayer folds (5), the folds (5) being additionally strengthened, secured and/or sealed through welding, the weld seam (9) being arranged along the outer exposed beaded face (7) of the fold (5), **characterized in that** first of all the fold (5) is pressed together to a finish by pressure rollers (3, 4) and then subsequently welded, and that the weld seam (9) runs inclined outwards to the normal passing through the centre of the semicircle, within the range of angle from 10° to 90°.

2. A container as in Claim 1, **characterized in that** the weld seam (9) runs within the range of angle from 15° to 80°.

3. A container as in Claim 1, **characterized in that** the outer exposed beaded face of the fold (5) exhibits a conical portion of surface (14) receiving the fusion weld seam (15).

4. A container as in Claim 3, **characterized in that** at least that part of the area of the fold (5) which lies under the conical portion of surface (14) exhibits a conical portion of surface which rests against the conical portion of surface (14).

5. A container as in Claim 3 or 4, **characterized in that** the length (a) of the generatrix of the conical portion of surface (14) amounts to 1.4 to 5 times the thickness of the sheetmetal of the bottom (2) and/or of the shell (1).

6. A container as in one of the Claims 3 to 5, **characterized in that** the weld seam (9) is applied essentially in the middle of the conical portion of surface (14).

7. A container as in one of the Claims 3 to 6, **characterized in that** the generatrices of the portion of surface (14) have a slightly concave curvature.

8. A mechanism for the production of weld seams on folds (5) as in one of the Claims 1 to 7, connecting the shell (1) and bottom (2) or top of containers, in which *[there are]* two pressure rollers (3, 4) which are profiled to receive a fold (5) and of which one is supported in a fixed position and may be driven in rotation by a driving mechanism and the other by means of its shaft is prestressed against the first, and a laser source is associated with them, **characterized in that** the laser source is so arranged that the laser beam (6) caused by it is directed between the pressure rollers within the plane passing through their shafts.

## Revendications

1. Récipient en métal constitué par une enveloppe (1) et par un fond (2) et/ou un double fond reliés aux extrémités de l'enveloppe par des replis de sertissage (5) en plusieurs couches, ces replis (5), étant en plus, renforcés, fixés et/ou rendus étanches par soudage et le cordon de soudure (9) étant réalisé le long de la surface extérieure (7) du bourrelet formé par le repli (5) qui est exposéeau dehors, caractérisé en ce que le repli (5) est d'abord obtenu par compression par des rouleaux de pression (3, 4), puis soudé, et que le cordon de soudure (9) est orienté en oblique ver l'extérieur suivant un angle compris entre 10° et 90° par rapport à la normale passant par le milieu de la demicirconférence limitant la section des replis.

2. Récipient selon la revendication 1, caractérisé en ce que le cordon de soudure (9) est orienté suivant un angle compris entre 15° et 80°.

3. Récipient selon la revendication 1, caractérisé en ce que la surface extérieure du bourrelet formé par le repli (5) qui est exposée au dehors comporte un secteur d'enveloppe conique (14) contenant le cordon de soudure fondu (15).

4. Récipient selon la revendication 3, caractérisé en ce qu'au moins la partie de surface du repli (5) qui se trouve au-dessous du secteur d'enveloppe conique (14) comporte un secteur d'enveloppe conique qui se trouve au contact du secteur d'enveloppe conique (14).

5. Récipient selon l'une des revendications 3 ou 4, caractérisé en ce que la longueur (a) de la ligne d'enveloppe du secteur d'enveloppe conique (14) représente de 1, 4 à 5 fois l'épaisseur de la tôle du fond (2) et/ou de l'enveloppe (1).

6. Récipient selon une des revendications 3 à 5, caractérisé en ce que le cordon de soudure (9) se trouve sensiblement au milieu du secteur d'enveloppe conique (14).

7. Récipient selon une des revendications 3 à 6, caractérisé en ce que les lignes d'enveloppe du secteur d'enveloppe (14) présentent une incurvation légèrement concave.

8. Dispositif pour la réalisation de cordons de soudure sur l'enveloppe (1) et le fond (2) ou le double fond de replis de sertissage (5) assurant l'assemblage des récipients selon une revendication 1 à 7, dans lequel deux rouleaux de pression profilés (3, 4) qui enserrent les replis de sertissage (5) et dont l'un est monté à poste fixe sur paliers et peut être entraîné en rotation par un dispositif de commande et dont l'autre est poussé contre le premier par son arbre et auxquels est associée une source de rayonnement laser (1), caractérisé en ce que cette source de rayonnement laser est placée de telle manière que le rayon laser (6) qu'elle émet est dirigé entre les rouleaux de pression dans le plan contenant leurs arbres.

Fig.1

Fig. 2

Fig.3